# EUROPEAN PATENT SPECIFICATION

(11) **EP 0 458 915 B1**
(45) Date of publication and mention of the grant of the patent: **28.08.1996**
(21) Application number: 90916562.3
(22) Date of filing: 19.10.1990
(51) Int. Cl.: G02C 5/14

(54) **EARSTEM FOR EYEGLASSES**
BRILLENBÜGEL
BRANCHES DE LUNETTES

(30) Priority: 17.11.1989 US 436473
(43) Date of publication of application: 04.12.1991
(73) Proprietor: OAKLEY, INC., Irvine California 92718 (US)
(72) Inventor: JANNARD, James, H., San Juan Capistrano, CA 92675 (US)
(74) Representative: Sommerville, John Henry
(86) International application number: US9006023
(87) International publication number: WO9107685

(56) References cited:
- GB-A- 2 204 143
- US-A- 0 265 916
- US-A- 1 338 880
- US-A- 3 944 344

## Description

### Background of the Invention

The present invention relates to eyewear, and more particularly to earstems configured to accommodate a wide deviation from the standard Alderson head size while providing a medially directed force at the distal portion of the earstems so as to increase the retentive force between the eyewear and the head.

Although corrective lenses are specifically crafted to accommodate the unique vision defects of an individual, the frames and earstems used to retain the lenses are typically a standard size and not crafted to conform to the particular contours of the head of each individual. Lenses which are employed in filtering eyewear such as sunglasses are also typically retained in stock frames. As it is virtually impossible to mass produce stock frames which fit every individual's head, the stock frames are constructed to conform to an idealized "standard" adult head such as that known in the art as the standard Alderson head form.

In determining the dimensions of the standard adult head, statistical data reflecting the range of cranial dimensions in an adult population was compiled to provide a hypothetical size head which represents the statistical median of the normal variations in the size of the adult head. These standard dimensions are then used to size the stock frames. Typically, the Alderson head form provides the anatomical model upon which stock frames are based. Therefore, the stock frames are constructed to conform to the hypothetical "standard" head rather than specific individuals.

As a result, such frames often result in a fit which is either too tight or too loose about the head of an individual. A tight fitting frame may cause localized pain and headaches, while a loose fitting frame may allow the eyewear to fall from the head and damage the frame or the lens. This is particularly disadvantageous for protective eyewear such as sunglasses which are to be used in active sports, such as bicycle racing or skiing. Additionally, in the event that corrective lenses vary in weight between the lenses, the uneven weight distribution may create localized pressure points causing discomfort.

A variety of means have been employed to improve the securing of eyewear to the head. These devices have included modifications from the use of the traditional hook at the end of the temple bar for wrapping behind the ear to loose strings or straps which connect the temples of the eyewear around the back of the wearer's head, thereby preventing the glasses from becoming completely displaced from the body. Alternatively, an elastic strap connecting the temples has been employed to engage the wearer's head and secure the eyewear in the desired position.

The prior attempts to improve the retention of eyewear about the wearer's head have also included the use of rubber or rubber-like plastic boots applied to the free ends of the temples for increasing the friction between the eyeglasses and the head, such as shown in U.S. Patent No. 3,684,356 to Bates. The Bates device, however, appears somewhat clumsy and, therefore, detracts from the appearance of the eyewear. In addition, the Bates device does not provide for a greater variation in the range of head widths on which the glasses can be worn. For example, a wider than median head will frequently contact the inside surface of the temple bar somewhere in between the eyeglass frame and the hook over the ear. This causes the hook portion to be lifted away from the head, thereby nullifying any advantage to such boots as the Bates device.

Another prior attempt to improve eyewear retention is disclosed in the Nelson patent (U.S. Patent No. 2,561,402), which discloses use of fluid chambers at the interface of the free end of the temples and the head. Nelson uses the fluid chambers in an effort to evenly distribute pressure between the temple and the head. As the fluid chambers of Nelson are permanently affixed to the temple in a predetermined orientation, modification for specific individuals is unavailable. In addition, the fluid retained within the chambers adds an undesired weight to the eyewear, the device is relatively complex from a manufacturing point of view, and the durability of the device is likely not as good as solid plastic alternatives.

US Patent No. 1,338,880 to Stevens discloses eyewear having an earstem for securement to the head of a wearer comprising an elongated earstem body having a proximal end adapted for attachment to an eyeglass frame or lens and a distal end for extending along side the head of the wearer in the region of the wearer's ear. Each earstem is shaped along its length to provide a diverging section extending from the proximal end of the earstem and a converging section disposed distally relative to the diverging section, the two sections being connected by an intermediate transition section.

US Patent No. 3,944,344 to Wichers discloses eyewear in which the earstems are curved uniformly inwardly towards each other and are said to provide inwardly directed pressures on the head of the user.

Notwithstanding the foregoing, there remains a need for providing a means of improving the compatibility of eyewear and the wearer so as to improve retention of the eyewear throughout a broader spectrum of head sizes within the population. A need also exists for a device which may be used in conjunction with a lens retained within a frame or alternatively, a lens alone. A further need exists for a device which may be used in cooperation with supplemental retaining devices without permanently altering the configuration of the eyewear.

An object of the invention, as discussed below, is to enable the manufacture of eyeglasses having an earstem without distal hooks so that the glasses containing the earstem may be comfortably worn by individuals having a greater linear dimension from the front of the face to the ear without discomfort, enable eyeglasses embodying earstems according to the present invention to comfortably and securely fit on a wider variety of head widths, and provide earstems which can be varied over a wide range of head widths while maintaining a medially directed force at the distal portions of the earstems and providing a space between the proximal portions of the earstems and the head of a wearer in use.

According to the present invention an eyewear earstem for securing an eyeglass frame or eyeglass lens to the head of the wearer and for positioning the lens in the wearer's line of sight, said earstem having an elongated earstem body having a proximal end adapted for attachment to the eyeglass frame or lens and a distal end for extending alongside the head of the wearer in the region of the wearer's ear, and said earstem having a converging section on the earstem disposed distally relative to a diverging section extending from the proximal end of the earstem, said converging section being inclined so as to produce, in use, a decreasing lateral distance between the earstem and the head of the wearer; a transition section on the earstem connecting the diverging section and the converging section; and a retaining section on the earstem extending distally from the distal end of the converging section to the distal end of the earstem, said retaining section being disposed so as to contact the wearer's head in use, and form an angle with said converging section, is characterized in that said earstem in combination with the eyeglass frame or lens is adapted to maintain a bias at the distal end of the earstem inwardly towards the head of the wearer in use over a wide range of lateral positions, and in that said diverging section on the earstem inclines away from the wearer's head while in use in the distal direction so as to provide, in use, a lateral distance between the earstem and the head of the wearer which precludes substantial contact of the diverging section and the head.

Preferably the intersection of the converging section and the retaining section is at a point within the range of from ¼ to ½ the overall length of the earstem from the proximal end thereof.

Said diverging section and/or said converging section may be substantially linear.

In one form the diverging section, transition section and converging section may be part of continuous arc.

It will be appreciated that the invention includes within its scope eyewear incorporating a pair of such earstems.

Further embodiments of the invention are disclosed in the dependent claims.

Preferably, the retaining section is configured to employ an elastomeric traction device or other friction enhancing structures or surface textures to further enhance the coefficient of static friction between the eyewear and the head.

The configuration of the present invention thereby provides for a wide range of posterior head widths without losing medially directed force at the distal end due to contact between the earstem and the anterior temple of the wearer.

### Brief Description of the Drawings

Figure 1 is a perspective view of eyewear embodying the earstems of the present invention.

Figure 2 is a bottom plan view of an embodiment of the earstems of the present invention, pivotally secured to an eyeglass frame.

Figure 3 is a side elevational view of an embodiment of the invention showing the incorporation of an elastomeric traction device.

Figure 4 is a front elevational view of the earstems of the present invention secured to an upper lens frame.

### Detailed Description of the Preferred Embodiment

As used in the present application, "eyewear" is a general term intended to embrace optical devices containing corrective lenses for defects in vision or lenses for such special purposes as filters for absorbing or blocking portions of the electromagnetic spectrum, providing physical shields for the eyes or making available other physical or optical functions for protective or visual assisting purposes.

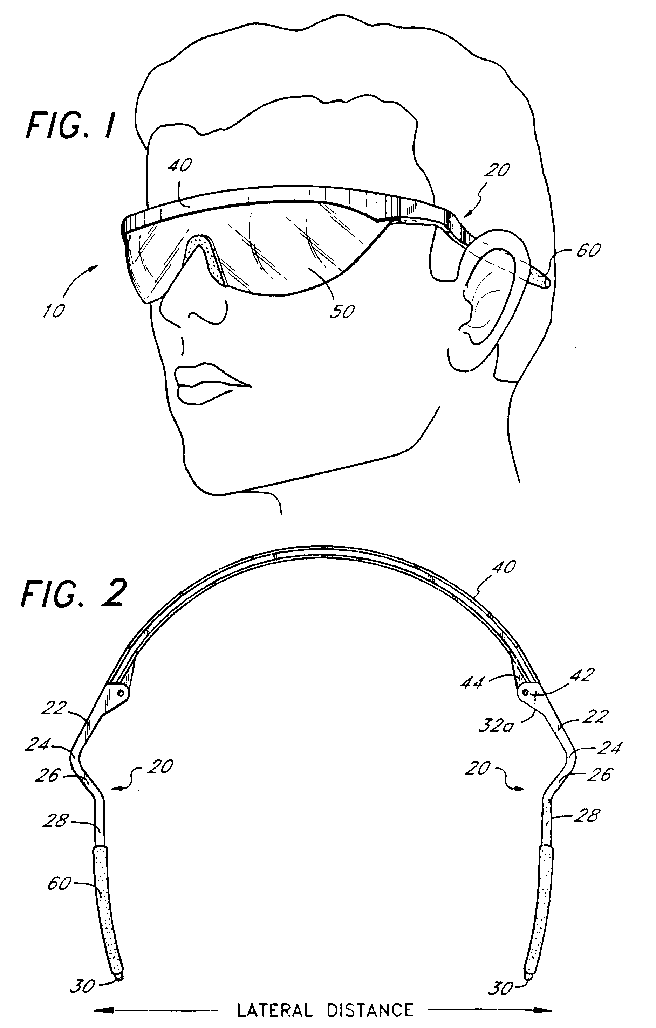

Referring to Figure 1, eyewear 10 is disclosed incorporating an earstem 20 in accordance with the present invention, affixed to a frame 40 so as to position a lens 50 in front of the eyes. The earstems 20 extend distally from the frame 40 and over the ears of the wearer so as to retain the eyewear 10 in the desired position relative to the head. As shown in Figure 1, the earstem 20 may include a traction device 60.

Referring to Figure 2, the earstems 20 of the present invention are shown in a bottom plan view. Each earstem 20 extends distally from the frame 40 to terminate at a distal end 30. Although the earstem 20 is shown affixed to the frame 40, the earstem 20 may be attached directly to the lens 50. Preferably, the earstems 20 are hingeably attached to the frame 40 or lens 50, and most preferably hingeably and removably attached, as well known in the art.

In a typical hingeable connection, the frame 40 or lens 50 includes a hinge aperture 42 extending through a protruding flange 44. The earstem 20 includes a pair of parallel apertured flanges 32a, 32b spaced so as to receive the flange 44 of the frame 40 or lens 50 therebetween. The apertures in the earstem 20 are aligned with apertures of the frame 40 or lens 50 and a pin is inserted so as permit rotation of the frame 40 relative to the earstem 20, thereby providing the hingeable connection. In a typical readily detachable hinge, the aperture 42 is replaced by an integral pin (not illustrated) which extends away from flange 44 in opposite directions along the same axis as the aperture 42. The flange 44 is inserted by deformation in between the opposing flanges 32a and 32b, and the integral pin snaps into the apertures on flanges 32a and 32b.

As shown in Figure 2, the earstems 20 include a diverging section 22, a transition section 24, a converging section 26 and a retaining section 28. Preferably, the diverging section 22 extends from the hingeable connection with the frame 40 away from the opposing earstem 20; that is, to define an increasing lateral distance between the earstems 20. As shown in Figure 2, when used in cooperation with a curved unitary lens 50 or frame 40, the diverging section 22 may extend substantially along the arc of, or radially outwardly from the frame 40. However, when used in connection with a substantially straight or linear frame, the diverging section 22 may form an obtuse angle therewith so as to extend away from the opposing earstem 20. Preferably, the diverging section 22 defines a sufficient angle with the frame 40 or lens 50 so as to define a lateral distance sufficient to span the width of the anterior portion of the temple region of a majority of the population.

Referring to Figure 2, the diverging section 22 terminates at the transition section 24. The transition section 24 represents the intersection of the diverging section 22 and the converging section 26. Preferably, the transition section 24 represents the greatest lateral distance between the earstems 20, and, as a consequence, the transition portion 24 will be spaced apart from the head of the wearer. In the embodiment illustrated in Figure 2, the transition section 24 is simply a bend in the direction of the earstem so that the earstem is angled back toward the head of the wearer in the distal direction. Alternatively, the transition section 24 may have an elongated axial dimension so as to extend the overall length of the earstem in the distal direction.

The converging section 26 begins at the transition section 24 and inclines toward the opposing earstem 20 so as to define a decreasing lateral distance. Preferably, the lateral distance at the termination of the converging section 26 is substantially equal to the actual width of the median sized adult head.

The converging section 26 terminates at the retaining section 28, typically at a point which is between 1/4 and 3/4 the overall length of the earstem, and preferably is between about 1/4 and 1/2 the overall length of the earstem from the proximal end thereof. The retaining section 28 extends distally to terminate at the distal end 30 of the earstem 20. As shown in Figures 1-3, the distal ends 30 are shown to bave a substantially linear configuration in the vertical plane; however, the distal ends may be configured to define a hook or loop, as well known in the eyewear art.

The retaining section 28 may converge slightly in the distal direction in the horizontal plane as illustrated in Figure 2, or alternatively, may extend substantially parallel to the opposing earstem 20. Although the retaining sections 28 may be employed in a substantially parallel configuration, it is preferable that the retaining sections 28 slightly converge as they extend from the converging section 26 to the distal end 30. In addition, the earstems 20 may be produced so as to exhibit an inherent bias toward the opposing earstem. This bias may be achieved by forming the earstem 20 from any of a variety of well-known polymers which exhibit an inherent resiliency. Preferably, the earstems 20 are integrally molded from any of a variety of known thermoplastic materials. Alternatively, the earstem 20 may be produced with a reduced inherent bias. These earstems are connected to the frame 40 or lens 50 in cooperation with a spring bias which urges the earstems 20 towards each other. The spring bias may be achieved through use of a spring member in the hinge or an elastic material within the hinge which urges the distal end of the earstems 20 towards each other.

Each of the diverging section and the converging section are illustrated in Figure 2 as being substantially linear, separated by an obtuse angle which has been identified as the converging section. However, the diverging section 22, converging section 26 and transition section 24 can also be configured to form a continuous arc of substantially constant or varying radius, and still accrue the advantages of the present invention. In addition, although the diverging section 22 and the converging section 26 are illustrated as meeting at transition section 24, the transition section 24 can also be axially elongated in the distal direction. In this embodiment, the diverging section 22 will encounter a first angle at the junction of the diverging section 22 and the transition section 24, and the transition section 24 will encounter a second angle at the junction of the transition section 24 and the converging section 26.

Preferably, the retaining section 28 is configured to employ an elastomeric traction device 60. The traction device 60 is disposed proximal to the distal end 30 of the earstems 20, and distal to the converging section 26 of the earstems 20. Preferably, the retaining sections 28 include a posterior shoulder (not shown) proximal to the distal end 30. The posterior shoulder is sized to engage an elastomeric traction device 60 so as to prevent distal axial displacement of the traction device 60. The traction device 60 provides an outer surface which enhances the retention of the eyewear relative to the head by providing an increased coefficient of static friction between the eyewear and the head. A preferred material for the traction device is KROTON G, manufactured by Shell Oil Company.

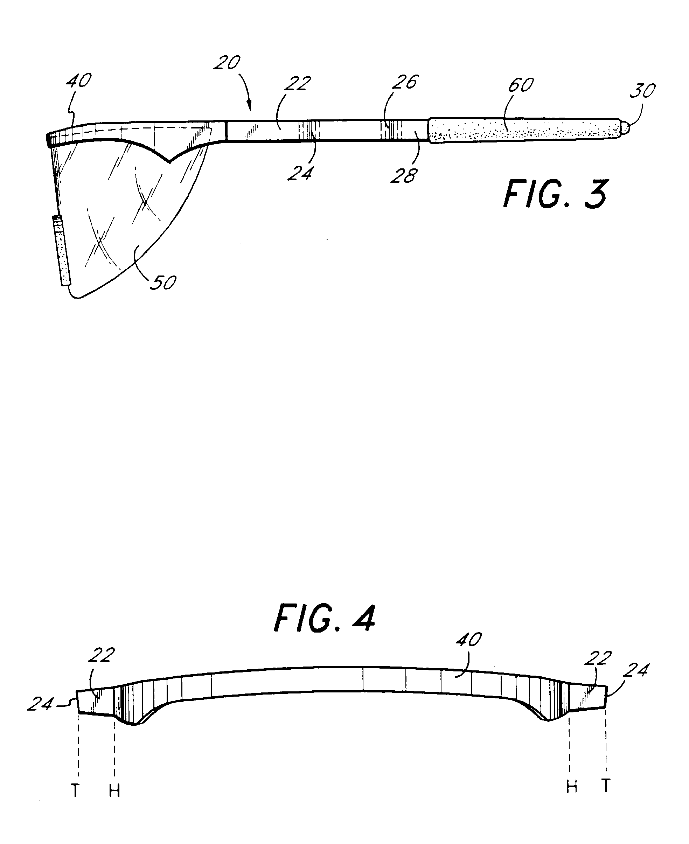

As shown in Figure 3, the earstems 20 extend horizontally in a distal direction from the frame 40 or lens 50. Although not shown, the earstems 20 may be configured to exhibit an elevational or vertical displacement as they extend distally. However, in the preferred configuration, the earstems 20 extend substantially horizontally from the frame 40 as illustrated.

Referring to Figure 4, the front elevational view of the frame 40 and earstems 20 illustrates the relative lateral distance at the transition section 24 with respect to the hinge and lens 50. Figure 4 illustrates the lateral distance defined by the transition section 24, as opposed to the lateral distance defined by the frame 40. Axes T represent the lateral most extent defined by the earstems 20 at the transition section 24, and axes H represent the lateral location of the connection of the earstems 20 to the frame 40. As shown in Figure 4, the T axis is disposed outside of axis H so that the earstems 20 define a greater lateral distance than the frame 40, and head of the wearer.

Thus, eyeglasses embodying the earstem of the present invention accrue several advantages over the prior art eyeglasses having earstems provided with the traditional ear hook at the distal end thereof. For example, particularly a problem with the larger head sizes, the length of the prior art earstem from the hinge point to the distal end only enables the eyeglasses to comfortably and securely fit on head sizes up to a maximum beyond which the ear hook renders the eyeglasses painful to wear or completely unwearable. The earstem of the present invention enables manufacture of eyeglasses having an earstem without the distal hook so that the glasses may be comfortably worn on individuals having a greater linear dimension from the front of the face to the ear without discomfort.

Elimination of the traditional hook on the earstem is made possible by the provision in accordance with the present invention of a medially inwardly directed force on the distal part of the earstem. The construction of the earstem of the present invention also enables the eyeglasses embodying earstems according to the present invention to comfortably and securely fit on a wider variety of head widths. Traditional earstems proceed in a substantially linear fashion from the hinge point back to the distal end. When eyeglasses embodying such earstems are placed on a head which is substantially wider than the median head size, the traditional earstems will tend to contact the head immediately adjacent or distal to the hinge point, and that will cause the distal end of the earstems to be radially outwardly displaced from the head of the wearer. In this manner, the distal ends of the earstems no longer provide a medially inwardly directed force to retain the earstems on the head.

In accordance with the earstem design of the present invention, the diverging section which inclines away from the medial side in the distal direction, combined with the converging section on the earstem which inclines medially in the distal direction, spaces the proximal portion of the earstem well apart from the head of the wearer, so that when the earstems are placed on a wider-than-median head, a medially (radially inwardly directed) force will still be exerted at the distal end of the earstem against the head of the wearer. Thus, the lateral distance between the distal ends of the earstems, such as illustrated in Figure 2, can be varied over a wider range than in the prior art, while still maintaining the medially directed force on the distal portion of the earstems and not on a more proximal portion thereof.

This present invention has been described in detail in connection with the preferred embodiments, but these are examples only and the present invention is not restricted thereto. It will be easily understood by those skilled in the art that other variations and modifications can easily be made within the scope of this invention, which is defined by the following claims.

## Claims

1. An eyewear earstem (20) for securing an eyeglass frame (40) or eyeglass lens (50) to the head of a wearer and for positioning the lens in the wearer's line of sight, said earstem (20) having an elongated earstem body having a proximal end adapted for attachment to the eyeglass frame (40) or lens and a distal end (30) for extending along side the head of the wearer in the region of the wearer's ear, and said earstem (20) having a converging section (26) on the earstem (20) disposed distally relative to a diverging section (22) extending from the proximal end of the earstem (20), said converging section (26) being inclined so as to produce, in use, a decreasing lateral distance between the earstem (20) and the head of the wearer; a transition section (24) on the earstem (20) connecting the diverging section (22) and the converging section (26); and a retaining section (28) on the earstem (20) extending distally from the distal end (30) of the converging section (26) to the distal end (30) of the earstem (20), said retaining section (28) being disposed so as to contact the wearer's head in use, and form an angle with said converging section (26), characterised in that the earstem (20) in combination with the eyeglass frame (40) or lens (50) is adapted to maintain a bias at the distal end (30) of the earstem (20) inwardly towards the head of the wearer in use over a wide range of lateral positions, and in that said diverging section (22) on the earstem (20) inclines away from the wearer's head while in use in the distal direction so as to provide, in use, a lateral distance between the earstem (20) and the head of the wearer which precludes substantial contact of said diverging section (22) and the head.

2. An earstem according to Claim 1, characterised in that the intersection of the converging section (26) and said retaining section (28)is at a point within the range of from ¼ to ½ the overall length of the earster (20) from the proximal end thereof.

3. An earstem according to Claim 1 or 2, characterised in that the diverging section (22) is substantially linear.

4. An earstem according to any one of Claims 1 to 3, characterised in that the converging section (26) is substantially linear.

5. An earstem according to any one of Claims 1 to 4, characterised in that the diverging section (22), transition section (24), and converging section (26) form a part of a continuous arc.

6. An earstem according to any one of Claims 1 to 5, characterised in that said transition section (24) is located closer to said proximal end of said earstem than said distal end (30) of said earstem (20).

7. An earstem according to any one of Claims 1 to 6, characterised in that the retaining section (28) on each earstem (20) is substantially linear.

8. An earstem according to any one of Claims 1 to 7, characterised in that the diverging section (22) transition section (24), and converging section (26) form a generally V-shape.

9. Eyewear incorporating a pair of earstems (20) according to any one of Claims 1 to 8.

10. Eyewear according to Claim 9, characterised in that said eyewear comprises two earstems (20) in combination with a unitary arcuate upper frame (40).

11. Eyewear as claimed in Claim 9 or 10, characterised in that said diverging section (22) of said earstem (20) extends from the proximal end of the earstem (20), distal to a hinge element (42) located at the proximal end of the earstem (20), in that said transition section (24) on the earstem (20) is distal to and adjacent to said diverging section (22), which provides, in use, a sufficient distance between the earstem (20) and the head of a wearer to preclude contact of said transition section (24) and the head; and in that said retaining section (28) is disposed so as to provide a force toward the head of a wearer in use, wherein the intersection of the converging section (26) and said retaining section (28) is at a point within the range of from ¼ to ½ the overall length of the earstem (20) from the proximal end thereof.

12. Eyewear according to any one of Claims 9 to 11, characterised in that the intersection of said converging section (26) and said retaining section (28) of each of said earstems (20) forms an obtuse angle.

13. Eyewear according to any one of Claims 9 to 12, characterised in that the diverging section (22) of each of said earstems (20) extends substantially along the arc defined by the arcuate frame (40).

14. Eyewear as claimed in any one of Claims 9 to 13, characterised in that said eyewear comprises sunglasses.

## Patentansprüche

1. Brillenbügel (20), welcher einen Brillenrahmen (40) oder eine Brillenlinse (50) am Kopf eines Brillenträgers sichert und die Linse in der Sichtlinie des Trägers positioniert, wobei der Bügel (20) aufweist: ein längliches Bügelelement, welches ein zur Befestigung des Brillenrahmens (40) oder der Linse angepaßtes nahes Ende und ein entlang der Kopfseite des Trägers im Bereich der Ohren des Trägers verlaufendes entferntes Ende (30) umfaßt, und einen konvergierenden Abschnitt (26) am Brillenbügel (20), welcher relativ zu einem vom entfernten Ende des Brillenbügels (20) verlaufenden divergierenden Abschnitt entfernt angeordnet ist, wobei der konvergierende Abstand (26) geneigt ist, um bei Verwendung einen abnehmenden Seitenabstand zwischen dem Brillenbügel (20) und dem Kopf des Brillenträgers auszubilden; einen Übergangsabschnitt (24) am Brillenbügel (20), welcher den divergierenden Abschnitt (22) und den konvergierenden Abschnitt (26) verbindet; und einen Halteabschnitt (28) am Brillenbügel (20), welcher vom entfernten Ende (30) des konvergierenden Abschnitts (26) zum entfernten Ende (30) des Brillenbügels (20) entfernt verläuft, wobei der Halteabschnitt (28) derart angeordnet ist, daß er bei Verwendung den Kopf des Brillenträgers berührt und mit dem konvergierenden Abschnitt (26) einen Winkel ausbildet, dadurch gekennzeichnet, daß bei Verwendung der Brillenbügel (20) zusammen mit dem Brillenrahmen (40) oder der Brillenlinse (50) eine nach innen zum Kopf des Brillenträgers gerichtete Vorspannung am entfernten Ende (30) des Brillenbügels (20) über einen breiten Bereich von Seitenpositionen beibehalten werden kann, und daß bei Verwendung der divergierende Abschnitt (22) des Brillenbügels (20) in Distalrichtung vom Kopf des Trägers weggeneigt wird, um bei Verwendung einen Seitenabstand zwischen dem Brillenbügel (20) und dem Kopf des Brillenträgers vorzusehen, welcher einen starken Kontakt zwischen dem divergierenden Abschnitt (22) und dem Kopf verhindert.

2. Brillenbügel nach Anspruch 1, dadurch gekennzeichnet, daß der Schnittpunkt des konvergierenden Abschnitts (26) und des Halteabschnitts (28) sich an einem Punkt innerhalb des Bereiches von einem Viertel bis zur Hälfte der kompletten Länge des Brillenbügels (20) von dessen entfernten Ende befindet.

3. Brillenbügel nach Anspruch 1 oder 2, dadurch gekennzeichnet, daß der divergierende Abschnitt im wesentlichen linear ist.

4. Brillenbügel nach einem der Ansprüche 1 bis 3, dadurch gekennzeichnet, daß der konvergierende Abschnitt (26) im wesentlichen linear ist.

5. Brillenbügel nach einem der Ansprüche 1 bis 4, dadurch gekennzeichnet, daß der divergierende Abschnitt (22), der Übergangsabschnitt (24) und der konvergierende Abschnitt (26) Teil eines kontinuierlichen Bogens sind.

6. Brillenbügel nach einem der Ansprüche 1 bis 5, dadurch gekennzeichnet, daß der Übergangsabschnitt (24) näher am nahen Ende des Brillenbügels als am entfernten Ende (30) des Brillenbügels (20) angeordnet ist.

7. Brillenbügel nach einem der Ansprüche 1 bis 6, dadurch gekennzeichnet, daß der Halteabschnitt (28) auf jedem Brillenbügel (20) im wesentlichen linear ist.

8. Brillenbügel nach einem der Ansprüche 1 bis 7, dadurch gekennzeichnet, daß der divergierende Abschnitt (22), der Übergangsabschnitt (24) und der konvergierende Abschnitt (26) im wesentlichen eine V-Form ausbilden.

9. Brille mit einem Paar von Brillenbügeln (20) gemäß einem der Ansprüche 1 bis 8.

10. Brille nach Anspruch 9, dadurch gekennzeichnet, daß die Brille zwei Brillenbügel (20) zusammen mit einem einheitlichen bogenförmigen oberen Rahmen (40) aufweist.

11. Brille nach Anspruch 9 oder 10, dadurch gekennzeichnet, daß der divergierende Abschnitt (22) des Brillenbügels (20) sich vom nahen Ende des Brillenbügels (20), entfernt von einem Gelenkelement (42), erstreckt, welches am nahen Ende des Brillenbügels (20) angeordnet ist; daß der Übergangsabschnitt (24) des Brillenbügels (20) entfernt zu und benachbart dem divergierenden Abschnitt (22) ist, welcher bei Verwendung einen ausreichenden Abstand zwischen dem Brillenbügel (20) und dem Kopf des Brillenträgers ausbildet, um einen Kontakt zwischen dem Übergangsabschnitt (24) und dem Kopf zu verhindern; und daß der Halteabschnitt (28) derart angeordnet ist, daß er bei Verwendung eine zum Kopf eines Brillenträgers gerichtete Kraft vorsieht, wobei der Schnittpunkt des konvergierenden Abschnittes (26) und des Halteabschnittes (28) an einem Punkt innerhalb des Bereiches von einem Viertel bis zur Hälfte der kompletten Länge des Brillenbügels (20) von dessen nahen Ende liegt.

12. Brille nach einem der Ansprüche 9 bis 11, dadurch gekennzeichnet, daß der Schnittpunkt des konvergierenden Abschnittes (26) und des Halteabschnittes (28) jedes Brillenbügels (20) einen stumpfen Winkel bildet.

13. Brille nach einem der Ansprüche 9 bis 12, dadurch gekennzeichnet, daß der divergierende Abschnitt (22) jedes Brillenbügels (20) im wesentlichen entlang dem durch den bogenförmigen Rahmen (40) festgelegten Bogen verläuft.

14. Brille nach einem der Ansprüche 9 bis 13, dadurch gekennzeichnet, daß die Brille eine Sonnenbrille umfaßt.

## Revendications

1. Branche de lunettes (20) pour fixer une monture de lunettes (40) ou un verre de lunettes (50) à la tête d'un porteur et pour positionner les verres dans la ligne de vision du porteur, ladite branche (20) ayant un corps de branche allongé ayant une extrémité proximale agencée pour être attachée à la monture de lunettes (40) ou au verre et une extrémité distale (30) qui s'étend le long du côté de la tête du porteur dans la zone de l'oreille du porteur, et ladite branche (20) ayant une section convergente sur la branche (20) disposée distalement par rapport à une section divergente (22) qui s'étend à partir l'extrémité proximale de la branche (20), ladite section convergente (26) étant inclinée afin de produire en utilisation, une distance latérale décroissante entre la branche (20) et la tête du porteur; une section intermédiaire (24) sur la branche reliant la section divergente (22) et la section convergente (26); et une section de retenue (28) sur la branche (20) s'étendant distalement de l'extrémité distale (30) de la section convergente (26) à l'extrémité distale (30) de la branche (20), ladite section de retenue étant disposée de façon à être en contact avec la tête du porteur lors de l'utilisation, et à former un angle avec ladite section convergente (26), caractérisée en ce que la branche (20) en combinaison avec la monture (40) de lunettes ou le verre (50) est agencée pour maintenir une inclinaison à l'extrémité distale (30) de la branche (20) intérieurement vers la tête du porteur lors de l'utilisation dans une large gamme de positions latérales, et en ce que lors de l'utilisation l'inclinaison de ladite section divergente (22) de la branche (20) s'éloigne de la tête du porteur dans la direction distale afin de définir une distance latérale entre la branche (20) et la tête du porteur qui prévient un contact substantiel de ladite section divergente (22) et de la tête.

2. Branche selon la revendication 1, caractérisée en ce que l'intersection de la section convergente (26) et de ladite section de retenue (28) est un point situé dans une zone allant de 1/4 à 1/2 de la longueur totale de la branche (20) à partir de l'extrémité proximale.

3. Branche selon la revendication 1 ou 2, caractérisée en ce que la section divergente (22) est sensiblement droite.

4. Branche selon l'une quelconque des revendications 1 à 3, caractérisée en ce que la section convergente (26) est sensiblement droite.

5. Branche selon l'une quelconque des revendications 1 à 4, caractérisée en ce que la section divergente (22), la section intermédiaire (24) et la section convergente (26) forment une partie d'un arc continu.

6. Branche selon l'une quelconque des revendications 1 à 5, caractérisée en ce que la section intermédiaire (24) est située plus près de l'extrémité proximale (20) de ladite branche que de ladite extrémité distale (30) de ladite branche (20).

7. Branche selon l'une quelconque des revendications 1 à 6, caractérisée en ce que la section de retenue (28) sur chaque branche (20) est sensiblement droite.

8. Branche selon l'une quelconque des revendications 1 à 7, caractérisée en ce que la section divergente (22), la section intermédiaire (24) et la section convergente (26) ont une forme générale en V.

9. Lunettes comportant une paire de branches (20) selon l'une quelconque des revendications 1 à 8.

10. Lunettes selon la revendication 9, caractérisées en ce que lesdites lunettes comportent deux branches (20) en combinaison avec une monture supérieure d'une pièce arquée (40).

11. Lunettes telles que revendiquées dans la revendication 9 ou 10, caractérisées en ce que ladite section divergente (22) de ladite branche (20) s'étend de l'extrémité proximale de la branche (20), distale à un élément charnière (42) situé à l'extrémité proximale de la branche (20), en ce que ladite section intermédiaire (24) sur la branche (20) est distale à et adjacente à ladite section divergente (22) qui définit lors de l'utilisation, une distance suffisante entre la branche (20) et la tête du porteur pour empêcher un contact de ladite section de transition (24) et de la tête; et en ce que ladite section de retenue (28) est disposée de façon à présenter une force vers la tête du porteur lors de l'utilisation, dans laquelle l'intersection de la section convergente (26) et de ladite section de retenue (28) est un point situé dans la zone allant de 1/4 à 1/2 de la longueur totale de la branche (20) à partir de l'extrémité proximale.

12. Lunettes selon l'une quelconque des revendications 9 à 11, caractérisées en ce que l'intersection de ladite section convergente (26) et de ladite section de retenue (28) de chacune desdites branches (20) forme un angle obtus.

13. Lunettes selon l'une quelconque des revendications 9 à 12, caractérisées en ce que la section divergente (22) de chacune desdites branches (20) s'étend sensiblement le long de l'arc défini par la monture arquée (40)

14. Lunettes telles que revendiquées dans une quelconques des revendications 9 à 13, caractérisées en ce que lesdites lunettes comportent des verres solaires.
